# EUROPEAN PATENT APPLICATION

(11) **EP 1 246 434 A1**
(43) Date of publication of application: **02.10.2002**
(21) Application number: 01107600.7
(22) Date of filing: 27.03.2001
(51) Int. Cl.: H04M 1/66, H04M 1/247

(54) **Protection system against unauthorised use of a mobile telephone**

(71) Applicant: Sony International (Europe) GmbH, 10785 Berlin (DE)
(72) Inventor: Winkler, Gregor, Digital Telecom. Europe, 85609 Aschheim (DE)
(74) Representative: Körber, Martin, Dipl.-Phys.

(57) **Abstract**

A mobile terminal 100 for a wireless communication system and a software product are provided comprising a protection against unauthorised use of one or more functions of the mobile terminal during use, with the mobile terminal being able to display a number of access codes 402 on the display 101 of the mobile terminal, to verify an access code 401 selected by a user from the number of access codes , and to grant access to the respective function if a correct access code is selected.

## Description

The present invention is related to a protection mechanism for preventing unauthorised access to the functions of a mobile terminal for a wireless communication system, in particular for preventing unauthorised access to the functions of a mobile telephone being in an operational mode.

In present day cellular telecommunication systems, a subscriber is issued a SIM (Subscriber Identification Module) card containing data for identifying the subscriber and for checking the user rights of the subscriber each time he or she uses the services of the system. With the SIM card a subscriber can use any mobile terminal that is operable in the telecommunication system. As a protective measure, a user has to enter a Personal Identification Number (PIN) prior to getting access to the functions of his mobile terminal. A mobile terminal can e.g. be a PDA (Personal Digital Assistant) a cellular mobile radiophone or the like for use in a wireless telecommunication system, e.g. the GSM or UMTS systems.

In the context of this application, the term PIN is either used as a synonym for the PIN kept on the SIM or as a synonym for a PIN stored in a memory of the mobile terminal. When a PIN is entered incorrectly for a certain number of times, access o the mobile terminal is usually blocked, until a correct Personal Unlock Key (PUK) or a Personal Unblocking Key is entered to set or reset personal access conditions. As distinct from the Personal Unblocking Key, the Personal Unlock Key (PUK) is not stored on the SIM but in a memory of the mobile terminal.

Being prompted for the PIN is normal when switching on a mobile phone. A correct PIN entered is a pre-condition that a mobile terminal enters its operational state. Only then calls can be received. An operational state or mode in this context includes the idle as well as the busy mode of the phone. Mobile terminals representing a combination of two or more devices in one unit may require a user authorisation by entering a PIN only for accessing certain sub-units. In the case of e.g. a PDA combined with a mobile phone, a user might be allowed to the PDA section without further prove of his identity, while the mobile phone sub-unit will only be accessible after entering a correct PIN. But in any case, once a mobile terminal is operational, any user is able to access all functions provided by the phone without further authorisation.

As a consequence, even a malicious subject getting hold of an unattended mobile terminal in operational mode has to date full access to all of its functions. Hereby, the culprit can for one accumulate a lot of charges by using the services available from the mobile telecommunication system in which the mobile terminal is currently registered, especially when the phone has been stolen in a foreign country and roaming fees are charged. On the other hand, he might further misuse personal information stored on the mobile terminal to the detriment of its legal owner.

The damage caused in the latter case becomes increasingly important as nowadays mobile terminals have a lot of personal information ready for a user, e.g. schedules, phone numbers, and memos, which usually disclose a lot of valuable information about the owner thus making him vulnerable. This personal information should therefore not be available to other persons than the owner of a phone.

To provide a protection mechanism for mobile phones in operational mode, EP 0 796 023 A2 proposes a setting of a time limit, after which the operation of the mobile telephone will be blocked, hereby setting a vague limit for unauthorised use. A misuse of the phone is still possible until the elapsed-time meter reaches the set limit, and until this moment, a culprit will be able to use the mobile terminal for his own purpose and to further spy out personal data stored on the phone.

According to the system disclosed in US 6 016 349, data that unequivocally identify the owner of the cellular phone are sent to a decryption and identification station when requesting services from a telecommunication system. The identifying data themselves are stored on a plug-in card, which the user has to insert in the phone each time he wants to use it. Alternatively the identifying data are stored in the mobile terminal and a means for the legal identification of the owner of the mobile terminal is activated by entering a secret code. When the transmission of the identifying data is not blocked by removing of the plug-in card from the mobile phone, or in another embodiment by deactivating the legal identification means, an illicit usage of the phone is not obstructed.

EP 0 993 167 A1 proposes an automatic switching of a mobile terminal into a security mode as soon as an end of a communication is detected. In this security mode no transmission of user information is possible, but a transmission of information specific to the mobile terminal is maintained. To exit the security mode and to get back to the phones nominal operation, a user has to enter a predetermined code. A malicious subject that gained control of the phone can make no calls from it, but is still allowed to access personal information stored on the phone. In addition, a user has to memorise a further code, which he is obliged to enter each time he wants to make a call.

It is therefore an object of the present invention to prevent unauthorised access but provide quick and easy way of authorisation for providing access to functions provided by a mobile terminal being in an operational state.

This object is achieved by a mobile terminal for a wireless communication system, providing a protection against unauthorised use of one or more functions of the mobile terminal during use, with an access control means for controlling the access to the one or more functions on the basis of access codes, a display means for displaying a number of access codes when one of the one or more functions is chosen, and a selecting means for selecting an access code from the number of displayed access codes, whereby the access control means grants access to the chosen function if a correct access code is selected.

Further, this object is achieved by a software product for providing a protection against unauthorised use of one or more functions provided by a mobile terminal for a wireless communication system during use, whereby the software product is, when being loaded in a memory of the mobile terminal able to perform the following program steps: displaying a number of access codes on the display of the mobile terminal, verifying an access code selected by a user from the number of access codes, and granting access to the respective function if a correct code is selected.

The proposed system of granting access to functions of a mobile terminal on the basis of a user selecting a correct access code from a number of access codes presented to him, allows the user to access the desired functions quickly, but still prevents a misuse of the phone by a malicious subject. Hereby it is especially convenient for a user, that no additional codes have to be memorised, a difficulty which many people fail to cope with. The only thing requested is to recognise the correct code within the number of codes presented, a task normally mastered by anyone.

Further advantageous features are claimed in the respective subclaims.

Preferably the access code to be selected is a graphical element, which is very easy to recognise. For increased security the access code can advantageously also be formed of a combination of alphanumeric elements.

Upon selecting a wrong access code for a first time, the mobile terminal is advantageously blocked until a Personal Identity Number or the like is entered, so that trying out different access codes subsequently by a malicious subject is prevented. To further increase the level of security, a Personal Unlock Key or the like has advantageously to be entered upon selecting a wrong access code for a second time.

Preferably it can be selected which functions are to require authorisation for being accessed.

Further advantageously separate access codes for different users to one function can be assigned, allowing full customisability of the protection mechanism.

Upon detection of a replaced Subscriber Identity Module or the like the access to each protected function is blocked until a Personal Unlock Key or the like is entered and the respective correct access code is selected. By this, all the protected information is hidden from the new user as long as he is not in the knowledge of the correct access codes.

Preferably the protection mechanism is automatically activated upon a defined operation condition of the cellular mobile telephone, whereby advantageously the operation condition is defined as a predetermined period of time for which no key entries are made by the user and/or the mobile telephone is being connected to a charging device and/or if the mobile terminal is connected to a hands free kit of a car, the operation condition is defined as the ignition of the car being switched off for a predetermined period of time, so that a user doesn't have to care about the security of his mobile terminal at any time.

To be sure that the phone operates in protected mode, a user can advantageously activate the protection mechanism at his own by pressing a predefined key or key-sequence or by executing a special menu command or by activating the key-lock of the phone.

For improved tamper-resistance the mobile terminal is further advantageously turned off completely upon a wrong access code being selected three times in a row.

In the following description, particular embodiments of the present invention are explained in more detail in relation to the enclosed drawings, in which
Fig. 1 shows a schematic representation of a mobile terminal according to the present invention with a number of access codes presented in the display,
Fig. 2 is a flow chart representation of an access scheme according to a particular embodiment of the present invention,
Fig. 3 is a block diagram showing the means of the mobile terminal according to the present invention,
Fig. 4a shows an enlarged view of the display of the mobile telephone with a first example of displayed access codes,
Fig. 4b shows an enlarged view of the display of the mobile telephone with a second example of displayed access codes, and
Fig. 4c shows an enlarged view of the display of the mobile telephone with a third example of displayed access codes.

In the drawings like elements are assigned identical reference numerals.

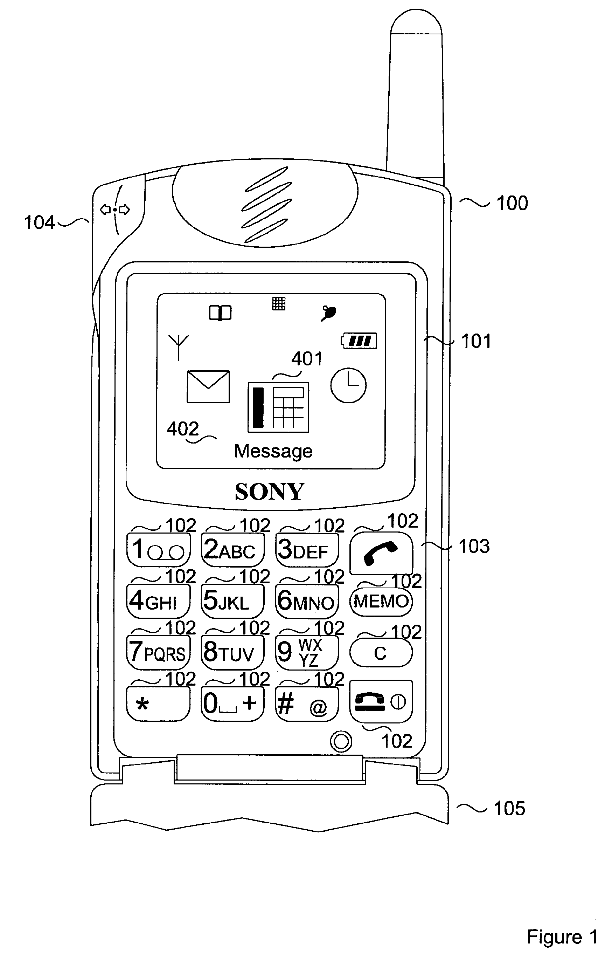

Fig. 1 shows a graphical representation of a mobile terminal 100 according to the present invention. The mobile terminal 100 comprises a display 101 for displaying information to the user, a number of keys 102 forming a key pad unit 103, and scroll means 104. The scroll means (jog dial) is a rotational key, which can be turned clockwise or counterclockwise to scroll through the displayed access codes and to select one of them or a key which allows a scrolling through the access codes and the selection of one of them by pressing different positions on the surface of the key. To prevent unintended pressing of keys 102, in a special embodiment of the present invention a flap 105 which covers the front face of the mobile terminal in its closed position is connected to the main body of the phone.

When a user switches on his mobile terminal 100, an information is displayed on the display 101 requesting the user to enter his Personal Identification Number (PIN), which is stored on the SIM. After the user entered the correct PIN with the keys 102 of key pad 103, the mobile terminal switches into the operational mode. In this state, a user can start to look for the desired function provided by the mobile telephone like e.g. the scheduler, the phone book, the message box, the memo facility or the ringer. Usually not all functions provided by the mobile terminal bear a potential for being misused to the detriment of the owner. Therefore, only some of the available functions will be selected by him for being protected according to the present invention. Upon selecting one of the protected functions, a number of access codes 402 is presented to the user on the display from which he has to select the correct one for finally getting access to the protected function chosen. When the user selects the wrong access code 401, he will be denied access to that function. Thus, somebody who does not know the correct access code has only a very small chance of picking the right code so that most probably a non-authorised person will not be able to misuse one of the functions. The relative security increases with the number of access codes presented for selection on the display of the mobile phone. To support a quick capture of the correct access codes by a user, the access codes are typically realised in the form of graphical elements, particularly as icons.

For a start, the icons can be proposed by the mobile phone. A user further has the possibility to download new icons via SMS or Internet from an icon provider service or even create icons on his own at one of those services, and thereby enlarge and individualise to his own taste the set of icons available on his mobile phone. Moreover, a user can create new icons on his own using means on his mobile terminal or an a different computing device. Icons can be transferred between a mobile terminal and another device as well as between two mobile terminals employing known means as e.g. a serial cable, a wireless connection or an exchangeable memory device or the like.

Alternatively to using icons, the access code may also be represented by an alphanumeric code being a combination of numbers and/or letters and/or special characters. Alphanumeric access codes provide a higher level of security compared to graphical elements, because it is impossible to establish an association between a special function and this kind of abstract code like it might e.g. be possible with icons.

To make sure that the access code can be selected in very short time, advantageously the number of access codes which are presented to the user each time he tries to access a protected function may not exceed 5 to 20 symbols. The correct symbol can be selected very easily with a scroll means 104 allowing an easy navigation through the arrangement of access codes on the display.

Further advantageously, the number of access codes are presented to the user of the mobile terminal automatically each time he tries to access one of the protected functions.

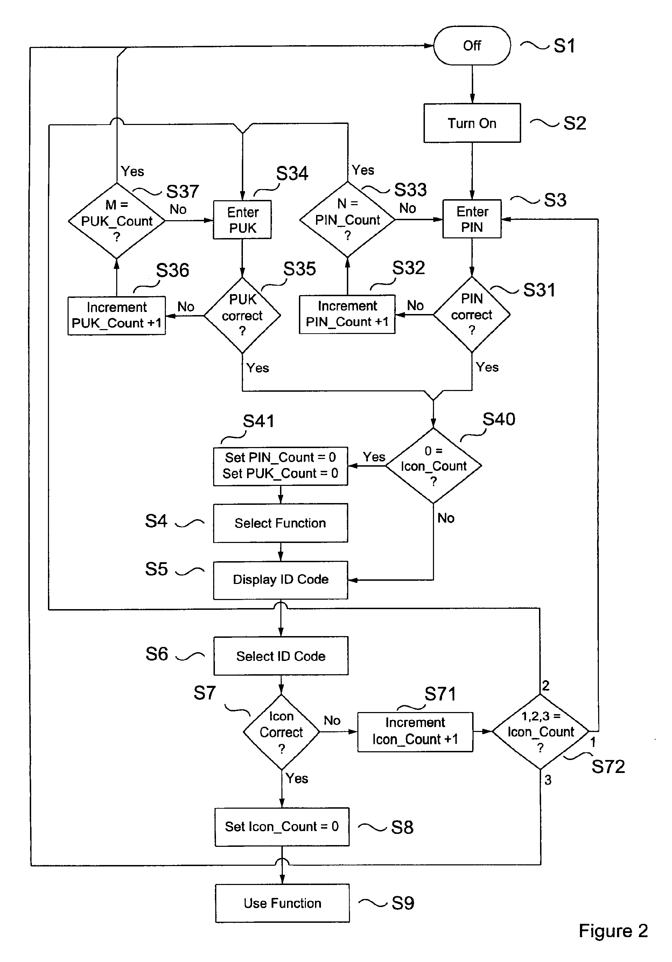

Although the described method for entering a password provides a quick way with practically no delay in accessing a desired function, the level of security provided herein is not comparable to the level of security given by e.g. the method of manually entering a Personal Identification Number each time when a password is required. In a special embodiment of the present invention care is taken therefore, that nobody tampering with a mobile terminal can try different access codes until he finally gets access to one of the protected functions. This is illustrated in Fig. 2 , a flow chart showing the operational sequence of the protection mechanism according to this particular embodiment of the present invention. The mobile terminal is turned on in step S2. The access codes monitored in particular are the Personal Identification Number (PIN), the Personal Unlock Key (PUK), and the access code 401 according to the present invention (icon). In the normal case a user is requested to enter his PIN S3 first, and can then select the function of his choice guided by the menu presented on the display of the mobile terminal in step S4. Next, the number of access codes is presented to the user on the display S5 from which he selects the correct one S6 for getting access. The system checks if the entered access code is correct S7, and if so re-sets the icon counter S8 to the initial value and enters the desired function S9 subsequently.

If the PIN entered in step S3 cannot be verified in step S31, the PIN-counter is incremented by one in step S32. In step S33 it is checked if the number of wrongly entered PINs has reached a certain value N, which is usually set to N=2. If not, the user is requested to re-enter the PIN again. If the limit N is already reached, the system proceeds to step S34 where the user is requested to enter the PUK which is checked for correctness in step S35 and if entered incorrect the PUK-counter is incremented by one is step S36. In step S37 it is queried how often the PUK has been entered wrongly, and if this has been done M times the mobile terminal will be turned off in step S1. M usually has a value of 1 or 2. If the PUK counter shows a value below M the user is requested to enter the PUK a further time. On entering a correct PUK this time, the system will proceed with checking if the number of wrongly entered access codes 401 in step 40 is zero or not.

If no wrong access code has been entered previously, the icon counter shows a value of zero. The query of step S40 in this case switches to step 41 where the PIN-counter and the PUK-counter are re-set to the initial values of zero. Then the user can select the desired function in step S4 upon which he is being displayed the number of access codes in step S5 from which he selects one in step S6, and, assumed that this time the user selects the wrong one which will be detected in step S7, the icon counter will be incremented by one in step S71, and subsequently the number of wrong selections of an access code by the user will be checked by a query in step S72. If the user selected the wrong code for the first time, he will be referred back to step S3, or in other words he has to enter the PIN again. If the wrong code was selected for a second time, the user is requested to enter the PUK again in step S34 after which, assumed the PUK has been verified correctly in step S35, the user can for a third time select an access code from the presented number of access codes in step S6. If a wrong code is selected for a third time, the mobile terminal is immediately switched off in step S1.

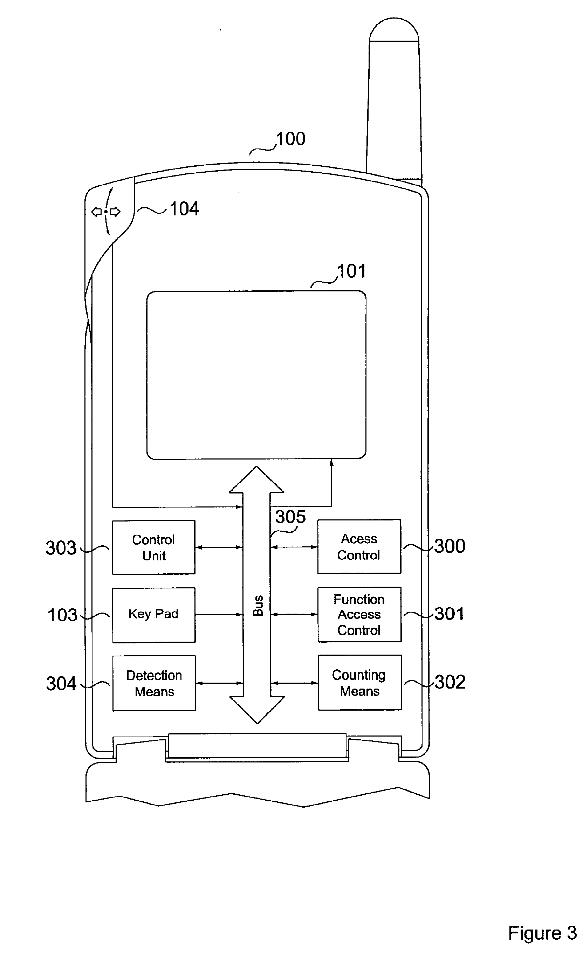

The means providing in their interaction the protection mechanism described above are shown in the block diagram of Fig. 3. It is to be noted that only features relevant for the understanding of the present invention are shown. All means communicate with each other either directly or via a databus 305. The control unit 303 controls the central functions of the mobile terminal 100. The access control 300 provides the functionality according to which the access to a selected function of the cellular mobile terminal is only granted upon selection of a correct access code from a number of access codes displayed on the display means 101.

According to a particular advantageous embodiment of the present invention, the access control 300 further provides a functionality to enter and store user profiles. A user profile typically comprises information about the user identity, the protected function or functions, the access code or codes 401 to those functions, the SIM-identity, and optionally a users PIN and/or PUK codes. Depending on the actual embodiment of the present invention not all those information have to be present in a user profile.

Two separate means are provided for selecting a special access code from a number of access codes presented on the display 101, a jog dial 104 and a key pad 103. The jog dial allows a fast and easy navigation through the number of access codes, especially when only one finger can be used. Additionally or alternatively also selected keys 102 from the key pad 103 can be used instead.

By pressing a pre-defined sequence of keys, like e.g. the sequence used to block the key pad, the protection mechanism provided by the access control 300 can be activated and/or deactivated manually by the user. In a special embodiment of the present invention, the protection mechanism is not active constantly, but only when certain conditions are met. To check the occurrence of a condition, the detection means 304 monitors the functions of the mobile terminal 100. One of the conditions is, that no key entries have been made for a predetermined time, so that a busy user can hop from function to function without being required to enter an access code but as soon as he seized to use the phone for a pre-set time, the detection means 304 will notice that, and activate the access control 300 thus enforcing the protection mechanism. The detection means will further activate the access control on noticing that the mobile terminal has been connected to a charger. In case the mobile terminal is connected to a hands-free set in a car the detection means will check if the ignition of the car is switched on or off. If the ignition has been switched off for a certain period of time, the access control 300 will be activated by the detection means 304.

The detection means 304 further checks if keys have been pressed in a certain sequence like described above, or if a key-lock has been activated. The detection means 304 will also activate the access control 300 upon the occasion that a user selects a special menu point. Especially advantageous, the protection mechanism is activated by the detection means upon detecting a flap 105 of the mobile terminal flipped to its closed position. In addition, the access control may be activated with a pre-defined time delay after one or more of the above described conditions were met.

The function access control 301 provides the user with a means for selecting functions to be protected by the access control 300. Functions not selected for protection can be accessed by anyone, therefore these function bear no critical personal information and have no potential for that a misuse creates a financial disaster. A user can enable and/or disable access codes for functions in a separate menu. As a protective measure against unauthorised modifications of those security settings, a second security code like e.g. the PUK may be requested to confirm changes.

Although a user has the possibility to choose which functions are to be protected by the access control, especially the following functions of a mobile terminal are suggested for being protected by the function access control 301: the organiser, the phone book, the memo block and the reading of stored SMS/e-mails because they contain a lot of personal information about the user. But also stored WAP pages and Java programs are included in the suggestion. Particularly the starting of a phone call is a function suggested for protection, because a culprit can create a lot of cost particularly by calling up certain phone numbers. To keep privacy, also accepting a phone call is suggested to be included in the protection mechanism.

The counting means 302 counts the number of incorrect selected access codes and incorrect entered PIN and PUK. It realises the access control scheme according to Fig. 2 in co-operation with access control 300.

According to a further embodiment of the present invention, different users sharing the same phone with the same SIM can have different passwords for accessing one and the same function. In this case, after the phone has been turned on and the PIN has been entered correctly, the current user of the phone is at first asked to identify himself, which he will do by selecting an access code from a number of assorted access codes especially made up for a user-logon. This identification mechanism is technically identical to the above described authorisation mechanism for accessing a protected function. When a user selected his special icon, his special subset number of access codes for accessing protected functions and/or his user profile will be used further on. If a user selected an icon which was not assigned to any user, the system will proceed like in the case of a falsely selected access code upon accessing a protected function.

The assignment of an access code can be done similar to the assignment of a PIN. Such methods are well known and therefore not further discussed here.

When the SIM card of the mobile terminal has been exchanged, very likely a different user takes over the mobile telephone. All the information regarding the protection of personal information and functions of the mobile terminal are then hidden from the new user so that he will be unable to retrieve some of the protected information. Sometimes the same user changes the SIM because he lost his old SIM card or because his contract with an operator of a radiotelephone network expired or because of any other reason. Then it has to be made sure, that the user can restore his access to the protected functions on the phone. For this purpose a user is required to enter the Personal Unlock Key directly followed by the access code. For convenience, the user is enabled to transfer his user profile to the identity of a different SIM card after entering the relevant security codes.

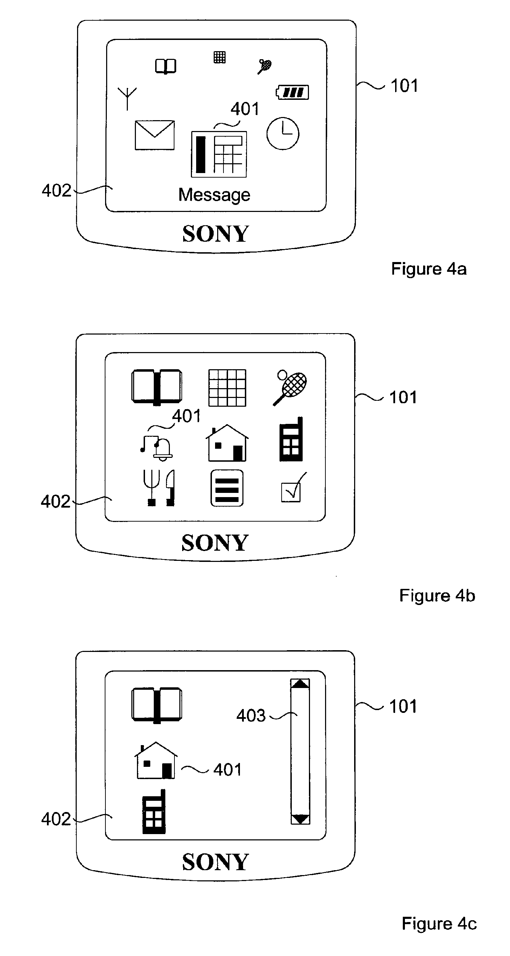

Distinct possibilities of arranging the number of access codes on the display of the mobile terminal are shown in Fig. 4a to Fig. 4c. According to a preferred embodiment of the present invention a user can choose which form of displaying the access codes he wants to use. In the example of Fig. 4a, the access codes are displayed according to a method described in EP 1 028 570 A1. According to this method at least some of the available access codes 401 are displayed on the display means 101 such that the currently selected access code 401 is displayed enlarged, which means that the other displayed access codes are shown in a relative smaller size. The display 101. of the mobile telephone is preferably a graphical display, which has a much higher resolution then a usual text or character display, and allows a visually attractive display of smoothly rotating access codes. The display illustrated in Fig. 4a shows 8 icons on 8 different positions, all lined up in a circular arrangement. Preferably, the name of the protected function to be accessed is displayed as a text information just below the access codes. In the example of Fig. 4a the respective function is "Message". The size of the access code just above this text information is displayed enlarged compared to the other displayed icons. This means, that this access code can now be selected by pressing the jog dial 104. The circular arrangement of the icons is accompanied by a change of the size of each icon, whereby the size of an icon is smaller for icons closer to the top of the display. With the help of the jog dial, a user can rotate the arrangement of icons either clockwise or counter-clockwise, whereby the icon ready for selection is always the biggest one near the bottom of the display. A circular arrangement in combination with a variation of the size of the icons as shown in Fig. 4a results in a 3-dimensional impression of the arrangement of access codes, emphasising the currently selected.

Fig. 4b shows an alternative grid-like arrangement of access codes on the display. All icons and/or other kinds of access codes have the same size with the currently selected access codes displayed in an inverse or highlighted presentation. A user can navigate through the icons by using certain keys of the key pad 103 or by help of the jog dial with which he can change the current position according to the direction indicated by the arrows printed on the jog dial. If the number of access codes 402 presented by the access control exceeds the number of icons that can be displayed on the graphical display 101, a scroll bar 403 will appear to inform the user that more icons than currently shown are available for the selection.

Fig. 4c shows a further alternative arrangement of access codes on the display of the mobile phone. Hereby all icons are lined up either vertically or horizontally and the scroll bar located on the opposite side of the display than the icons indicates by arrows that more access codes are available when scrolling in the direction of the arrows. When the topmost or bottommost icon of a list is shown on the display, the respective arrow will vanish.

While the principles of the invention have been described with reference to specific embodiments, this description is not meant to be construed in a limiting sense. Various modifications of the disclosed embodiments as well as other embodiments of the invention will be apparent to persons skilled in the art upon reference to this description. As an example, a request for a PIN entry may be omitted or the number of retries will be varied. Further, additional security codes might be introduced to the concept and/or the number of allowed users may be restricted. Also the introduction of a special user with extra rights for controlling the access mechanism will be one of the modifications within the scope of the present invention. In addition, any variation in the access scheme as illustrated in Fig. 2 like e.g. a changing of the sequence of the process steps, omitting existing steps and/or adding new steps does not depart from the principles of the present invention.

## Claims

1. A mobile terminal (100) for a wireless communication system, providing a protection against unauthorised use of one or more functions of said mobile terminal during use, with
an access control means (300) for controlling the access to said one or more functions on the basis of access codes
a display means (101) for displaying a number of access codes (402) when one of said one or more functions is chosen, and
a selecting means (104, 103) for selecting an access code (401) from said number of displayed access codes (402), whereby said access control means (300) grants access to said chosen function if a correct access code is selected.

2. A mobile terminal according to claim 1,
**characterised in**
**that** said access code comprise graphical elements and/or alphanumeric elements.

3. A mobile terminal according to claim 1 or 2,
**characterised in**
**that** upon selecting a wrong access code for a first time, said access control means blocks said mobile terminal until a Personal Identity Number or the like is entered.

4. A mobile terminal according to claim 3,
**characterised in**
**that** upon selecting a wrong access code for a second time, said access control means blocks said mobile terminal until a Personal Unlock Key or the like is entered.

5. A mobile terminal according to any of the preceding claims,
**characterised by**
a function access control means (301) allowing a user to protect selected functions of said mobile terminal on the basis of access codes.

6. A mobile terminal according to claim 5,
**characterised in**
**that** said function access control means allows to assign access codes for different users to one function.

7. A mobile terminal according to any of the preceding claims,
**characterised in**
**that** upon detection of a replaced Subscriber Identity Module or the like said access control means blocks access to each protected function until a Personal Unlock Key or the like is entered and the respective correct access code is selected.

8. A mobile terminal according to any of the preceding claims,
**characterised by**
a detection means (304) for detecting an operation condition of said cellular mobile telephone, whereby said access control means automatically enforces protection against further use of said protected functions depending on said detected operation condition.

9. A mobile terminal according to claim 8,
**characterised in**
**that** said operation condition is defined as a predetermined period of time during which no key entries are made and/or said operation condition is defined as said mobile terminal being connected to a charging device and/or if said mobile terminal is connected to a hands free kit of a car said operation condition is defined as the ignition of said car being switched off for a predetermined period of time.

10. A mobile terminal according to any of the preceding claims,
**characterised in**
**that** said access control means is activated upon user action, e.g. activation of a key-lock.

11. A mobile terminal according to any of the preceding claims,
**characterised in**
**that** said access control means turns off said mobile terminal completely upon a wrong access code being selected three times in a row.

12. Software product for providing a protection against unauthorised use of one or more functions provided by a mobile terminal for a wireless communication system during use, said software product when being loaded in a memory of said mobile terminal being able to perform the following program steps :
displaying (S5) a number of access codes (402) on the display (101) of said mobile terminal (100),
verifying (S7) an access code (401) selected by a user from said number of access codes 402, and
granting access (S9) to said respective function if a correct access code is selected.

13. A software product according to claim 12,
**characterised in**
**that** said access code comprise graphical elements and/or alphanumeric elements.

14. A software product according to claim 12 or 13,
**characterised by**
program steps (S72) for blocking said mobile terminal upon selection of a wrong access code for a first time until a Personal Identification Number or the like is entered.

15. A software product according to claim 14,
**characterised by**
program steps (S72) for blocking said mobile terminal upon selection of a wrong access code for a second time until a Personal Unlock Key or the like is entered.

16. A software product according to one of the claims 12 to 15,
**characterised by**
program steps allowing a user to protect selected functions of said mobile terminal on the basis of access codes.

17. A software product according to claim 16,
**characterised by**
program steps allowing to assign access codes for different users to one function.

18. A software product according to one of the claims 12 to 17,
**characterised by**
program steps for blocking access to each protected function after an exchange of a Subscriber Identity Module or the like until a Personal Unlock Key is entered and the respective correct access code is selected.

19. A software product according to one of the claims 12 to 18,
**characterised by**
program steps for automatically enforcing protection against further use of said protected functions upon a detected operation condition.

20. A software product according to claim 19,
**characterised in**
**that** said operation condition is defined as a predetermined period of time during which no key entries are made and/or said operation condition is said mobile terminal being connected to a charging device and/or said operation condition is the ignition of a car being switched off for a predetermined period of time if said mobile terminal is connected to a hands free kit of said car.

21. A software product according to any of the claims 12 to 20,
**characterised by**
program steps for activating said protection of protected functions upon user action, e.g. activation of a key-lock.

22. A software product according to one of the claims 12 to 21
**characterised by**
program steps (S72) for turning off said mobile terminal completely upon a wrong access code being selected three times in a row.
